# EUROPÄISCHE PATENTSCHRIFT

(11) **EP 1 101 731 B1**
(45) Veröffentlichungstag und Bekanntmachung des Hinweises auf die Patenterteilung: **18.01.2006**
(21) Anmeldenummer: 00123455.8
(22) Anmeldetag: 06.11.2000
(51) Int. Cl.: C01B 3/56

(54) **Verfahren zur Herstellung von Synthesegas in Verbindung mit einer Druckwechsel-Adsorptionsanlage**
Process for the preparation of synthesis gas in connection with a pressure swing adsorption plant
Procédé pour la production de gaz de synthèse combiné avec un dispositif d'adsorption à pression alternée

(30) Priorität: 19.11.1999 DE 19955676
(43) Veröffentlichungstag der Anmeldung: 23.05.2001
(73) Patentinhaber: Uhde GmbH, 44141 Dortmund (DE)
(72) Erfinder: Wyschofsky, Michael, 44135 Dortmund (DE); Liu, Vincent, 44795 Bochum (DE)
(74) Vertreter: Meinke, Dabringhaus und Partner GbR

(56) Entgegenhaltungen:
- EP-A- 0 015 413
- EP-A- 0 620 035
- US-A- 5 203 888

## Beschreibung

Die Erfindung richtet sich auf ein Verfahren und eine Anlage zur Herstellung von Synthesegas, Wasserstoff und/oder Reduziergas unter Einsatz eines mantelseitig befeuerten Primärreformers, der im Verbund mit einer Druckwechsel-Adsorptionsanlage zur Reinigung des Produktgases betrieben wird.

In einem Primärreformer reagieren rohrseitig Wasserdampf und ein kohlenstoffhaltiges Einsatzgas, z.B. Methan, nach den linear abhängigen Gleichungen (1), (2) und (3) zu Kohlenmonoxid, Kohlendioxid und Wasserstoff:

CH₄ + H₂O → 3 H₂ + CO + 205 kJ/mol (1)

CH₄ + 2 H₂O → 4 H₂ + CO₂ + 164 kJ/mol (2)

CO + H₂O → H₂ + CO₂ - 41 kJ/mol (3)

Während die Reaktionen (1) und (2) stark endotherm sind, ist Reaktion (3) schwach exotherm, zusammen sind die Reaktionen endotherm. Daher bedarf es einer mantelseitigen Befeuerung der Rohre des Primärreformers zum Ausgleich der Energiebilanz. Als Befeuerungsgas für die Befeuerung des Primärreformers kann Erdgas oder ein heizwertreiches Restgas aus einem anderen Anlagenteil oder eine Mischung daraus genutzt werden.

Die Beheizung muß geregelt erfolgen, um die Temperatur stets konstant zu halten. Üblicherweise wird daher das Brenngas für die Befeuerung aufgeteilt in einen großen Anteil für die Feuerungshauptlast, welcher im wesentlichen konstant bleibt, und einen kleinen Anteil für die Regelung der Feuerung.

Während die rohrseitige Synthesegasreaktion üblicherweise bei hohem Druck, bei Wasserstoff-Erzeugungsanlagen ca. 30 bar, bei Reduziergasanlagen ca. 5 bar, stattfindet, wird die mantelseitige Befeuerung des Primärreformers üblicherweise bei einem Druck knapp unterhalb des Atmosphärendrucks betrieben, um bei Leckagen keinen Austritt von Rauchgas zu riskieren.

Der Hauptteil des Befeuerungsgases für die Befeuerung muß gegenüber dem mantelseitigen Druck der Feuerung leicht erhöht sein, damit es den Düsendruckverlust an den Eindüsungsstellen in den Feuerungsraum überwinden kann und sich dabei im Feuerungsraum gut verteilt. Üblicherweise liegt der erforderliche Vordruck um ca. 0,3 bar über dem mantelseitig im Feuerungsraum vorherrschenden Druckniveau, also bei ca. 1,3 bar absolut. Der Anteil des Brenngases, der für die Regelung vorzusehen ist, benötigt einen etwas höheren Vordruck, da noch der Druckverlust durch das Regelventil, mit dem die Mengenregelung erfolgt, zu überwinden ist. Üblicherweise liegt der erforderliche Vordruck um ca. 1 bar über dem mantelseitig im Feuerungsraum vorherrschenden Druckniveau, also bei ca. 2 bar absolut.

Um diese Vordrücke einzustellen, wird das angelieferte Brenngas, z.B. Erdgas, üblicherweise durch Reduzierventile von seinem Lieferdruck, der mit 5 bis zu 60 bar oft erheblich größer ist, in seinem Druck auf die entsprechenden Drücke von ca. 1,3 bar absolut und 2 bar absolut durch Drosselung herabgespannt. Die Erfindung sieht vor, die Arbeitsfähigkeit des Brenngases, die bei diesem Herabspannen üblicherweise ungenutzt bleibt, mittels eines Ejektors zu nutzen.

Das in der rohrseitigen Reaktion im Primärreformer gebildete rohe Synthesegas besitzt einen großen Anteil Kohlenmonoxid CO, der bei der Erzeugung von Wasserstoff H₂ als Produktgas im anschließenden CO-Konvertierungsreaktor bei höherer Temperatur nach der oben erwähnten exothermen Reaktion (3) weiter reagiert. Nach der Abscheidung von Prozeßkondensat verbleiben im Synthesegas im wesentlichen die Bestandteile Wasserstoff H₂ und Kohlendioxid CO₂ sowie kleine Reste des Einsatzgases und Spuren aus Nebenreaktionen.

Je nach Verwendungszweck des Produktgases und den damit verbundenen Reinheitsanforderungen wird in einer nachfolgenden Anlage eine Gastrennung durchgeführt, in der die im Produktgas unerwünschten Gasanteile abgeschieden und ausgesondert werden.

Diese Gastrennung wird in den meisten Fällen durch eine Druckwechsel-Adsorptionsanlage durchgeführt. In dieser Druckwechsel-Adsorptionsanlage werden mehrere Adsorber zyklisch betrieben, wobei eine große Anzahl verschiedener Betriebsweisen betreffend der Aufeinanderfolge der Zyklen aus der Literatur bekannt ist.

Aus der EP-0 015 413-B1 ist ein Druckwechsel-Adsorptionsverfahren zur Zerlegung oder Reinigung von Gasgemischen bekannt, bei dem als Treibgas auch Teilmengen des zu reinigen Gasgemisches eingesetzt werden. Zum Stand der Technik sei auch auf die DE-33 37 078-A1 und DE-33 29 435-A1 verwiesen.

Gemeinsam ist allen Konzepten, daß jeder Adsorber zunächst unter Druck mit der abzuscheidenden Gaskomponente beladen wird, während die Produktkomponente den Adsorber durchströmt und ihn über eine Produktleitung verläßt. Daraufhin findet eine Entspannungsphase statt, wodurch die abgeschiedene Gaskomponente desorbiert und über eine Abgasleitung gesondert abgeführt wird. Im Anschluß daran, alternativ auch schon während des Entspannens, findet ein Spülvorgang mit Produktgas für die Regeneration des Adsorbens statt, wobei das Spülgas dem Abgas meist beigemischt wird. Danach wird der Adsorber neu bespannt und steht für einen neuen Zyklus bereit.

Technologische Unterschiede in den einzelnen Druckwechsel-Adsorptionsverfahren bestehen hauptsächlich darin, in welcher Weise mehrere Adsorber so zusammengeschaltet werden können, daß sich ein möglichst glatter Produktfluß ergibt, außerdem in der Art der Regelung und Überwachung sowie in der Wahl von Druckniveaus und Spülzeiten.

Bei den Anlagen zur Herstellung von Wasserstoff H₂ wird als Druckniveau für Desorption und Spülung üblicherweise dasjenige des Hauptanteils des Primärreformer-Brenngases gewählt, da das desorbierte Gas und erst recht das Spülgas heizwertreich sind und sich zur mantelseitigen Befeuerung des Primärreformers daher eignen und lediglich mit etwas Zusatzbrennstoff angereichert werden müssen. Eine weitergehende Desorption durch Anlegen von Vakuum erschien den Fachleuten als unwirtschaftlich, da der Einsatz von Vakuummaschinen zu teuer sei und für ihren Betrieb sehr viel Energie verbräuchten.

Bei der Herstellung von Reduziergas wird das im Primärreformer erzeugte Synthesegas üblicherweise direkt in den Anlagenteil, in dem die gewünschte Reduktion stattfinden soll, geführt. Das aus der Reduktionsanlage entweichende Restgas ist zum einen noch sehr reich an heizwertreichen und wiederverwertbaren Komponenten, aber auch an Wasserdampf H₂O, Kohlendioxid CO₂ und Verschmutzungen, die abgeschieden werden müssen. Bei der adsorptiven Abreicherung dieses Restgases von Kohlendioxid CO₂ durch Druckwechsel-Adsorptionsanlagen ist der Einsatz von Vakuummaschinen zur Erzeugung von Vakuum hingegen gebräuchlich, um eine genügende Desorptionswirkung zu erzielen.

Aufgabe der Erfindung ist die Schaffung einer Lösung, mit der die Arbeitsfähigkeit eines für die Befeuerung des Primärgasreformers eingesetzten Brenngases aus der Druckwechsel-Adsorptionsanlage nutzbar gemacht wird.

Mit einem Verfahren der eingangs bezeichneten Art wird diese Aufgabe gemäß der Erfindung dadurch gelöst, daß der Druckwechsel-Adsorptionsanlage entnommenes Desorptionsabgas einem Ejektor saugseitig zugeführt wird, der von einem Teilstrom des Brenngases für den Primärreformer betrieben wird, wobei das Desorptionsabgas je nach Betriebsweise einem Brenngashauptstrom und/oder einem Brenngasregelstrom zugeführt wird.

Mit der Erfindung wird erreicht, daß mit Hilfe der Arbeitsfähigkeit des einzusetzenden Brenngases ein Vakuum mittels eines Ejektors erzeugt wird, so daß es möglich ist, das Abgas aus Desorption und Spülung der Druckwechsel-Adsorptionsanlage miteinander zu vermischen und erfindungsgemäß einzusetzen. Die gesamte, für den Betrag des Primärreformers notwendige Menge an Brenngas wird dabei nicht vergrößert.

Bei der Wasserstofferzeugung liegt dies daran, daß zwar die Arbeitsfähigkeit des Brenngases genutzt wird, der feuerungsseitige Energiebedarf bezüglich Zusatzbrenngas für den Betrieb des Primärreformers jedoch nur um den Betrag steigt, der dadurch verloren geht, daß weniger heizwertreiches Produktgas, nämlich reiner Wasserstoff H₂, für die Spülung und Regeneration der Druckwechsel-Adsorptionsanlage unter Vakuum vom Produktstrom abgezweigt werden muß.

Ein besonderer Unterschied der vorliegenden Verfahrensweise gegenüber dem eingangs genannten Stand der Technik insbesondere nach der EP-0 015 413 besteht darin, daß als Treibmittel kein im Zuge des Verfahrens der Druckwechsel-Adsorption auftretender Gasstrom verwendet wird, sondern in Verfahrenskombination mit dem vorgeschalteten Steamreformer ein Teil des für gewöhnlich unter höheren Drücken zur Verfügung stehenden Reformergases. Dieses Brenngas steht im ausreichenden Maß zur Verfügung und wird in dem Druckwechsel-Adsorptionsabgas gemeinsam im Reformer verfeuert.

Dieses unter hohem Druck stehende Brenngas wird in der Arbeitsfähigkeit häufig nicht genutzt, ein an der Anlagengrenze mit beispielsweise 35 bar zur Verfügung stehendes Erdgas wird für gewöhnlich auf Brennervordruck (ca. 1,2 bis 5 bar) durch adiabate Drosselung entspannt. Erkennbar ergeben sich gegenüber den bekannten Verfahren wesentliche Vorteile, die beispielsweise darin bestehen, daß das Treibmittel nicht in Pufferbehältern gesammelt wird. Pufferbehälter arbeiten nicht zyklisch, sondern generell unter stationärem Vakuum.

Ein weiterer Vorteil der erfindungsgemäßen Verfahrensweise besteht darin, daß keine dem Verfahren zugeführten Eintrittsgase und auch keine abzuführenden Produktgase als Treibmittel eingesetzt werden, was dazu führt, daß für diese Fälle die Produktausbeute ungeschmälert bzw. generell verbessert wird. Bei Wasserstoff- und Synthesegas-Erzeugungsanlagen wird die Qualität und Menge des abzuführenden Produktgases als einziges Bewertungskriterium beachtet, hier liegen besondere Vorteile der Erfindung.

Schließlich besteht ein zusätzlicher Vorteil der Erfindung darin, daß keine Entspannungsgase als Treibmittel eingesetzt werden, was dazu führt, daß auch Druckwechsel-Adsorptionsanwendungen bei niedrigem Adsorptionsdruck, z.B. in Reduziergasanlagen wirksam unter Vakuum desorbieren können.

Ein weiterer Vorteil liegt darin, daß beispielsweise dem Verlust an Heizwert im Abgas der Druckwechsel-Adsorptionsanlage, der durch zusätzliches Brenngas ausgeglichen werden muß, ein überwiegender Gewinn an Produktgas gegenübersteht, wodurch sich sogar, bezogen auf die erzeugte Menge an Produktgas, eine Entspannung an Zusatzbrenngas und an Einsatzgas und somit zusätzlich eine Senkung der Investitionskosten für den Primärreformer ergibt.

Diesem Verlust an Heizwert im Abgas der Druckwechsel-Adsorptionsanlage, der durch zusätzliches Brenngas ausgeglichen werden muß, steht jedoch ein überwiegender Gewinn an Produktgas gegenüber, wodurch sich sogar, bezogen auf die erzeugte Menge an Produktgas, eine Einsparung an Zusatzbrenngas und an Einsatzgas und somit zusätzlich eine Senkung der Investkosten für den Primärreformer ergibt, was Vorteile der Erfindung sind.

Bei der Reduziergaserzeugung liegt dies daran, daß der im Ejektor dem Abgas zugemischte Brenngasstrom ohnehin zur Befeuerung des Primärreformers benötigt würde, somit also nur einen Umweg in die Feuerung nimmt. Hier liegt der Vorteil der Erfindung im Wegfall eines konventionellen Vakuumverdichters mit rotierenden Teilen, der zum einen deutlich teurer als ein Ejektor ist und zum anderen eine große Menge elektrischer Energie zu seinem Betrieb benötigt.

Weitere Ausgestaltungen der Erfindung ergeben sich aus den Unteransprüchen, wobei sich eine erfindungsgemäße Anlage zur Lösung der gestellten Aufgabe durch einen mit Brenngas betriebenen Ejektor auszeichnet mit einem saugseitigen Anschluß zur Beschickung mit Desorptionsgas.

Zweckmäßig wird dabei verfahrensmäßig und auch anlagemäßig der Ejektor dazu benutzt, das auf niedrigem Niveau befindliche Desorptionsgas auf das Druckniveau eines Befeuerungsgas-Vorlagebehälters und/oder das Druckniveau des Regelungsbrenngases zu erhöhen.

Die Erfindung sieht auch vor, daß die Vakuumerzeugung und die Anwendung der sich dabei einstellenden Vakuumdruckstufen auf die Desorption der Druckwechsel-Adsorptionsanlage wenigstens zweistufig erfolgt. Dabei wird zunächst nur ein Teil der adsorbierenden Komponenten bei einem schwächeren Vakuum desorbiert, danach wird das Vakuum verstärkt und mit diesem verstärkten Vakuum eine weitere Desorption vorgenommen.

Diese stufenweise Verstärkung des Vakuums sowie das Anlegen des Vakuums zur Steigerung der Desorptionswirkung kann mehrfach erfolgen, mindestens jedoch zweifach. Der Trick ist dabei, bei Betrachtung der Treibstrahlmengen, daß je höher das Vakuum werden soll, desto mehr Treibstrahlvolumen wird erforderlich, um eine bestimmte Gasmenge zu desorbieren. Da die Menge an Treibstrahl sich aber nach dem Heizbedarf im Primärreformer richtet, kommt man statt einer kontinuierlichen Absenkung dem gewünschten Ziel durch die Mehrstufigkeit nahe, wobei die Anzahl der Stufen sowie die jeweils herrschenden Drücke im Einzelfall nach wirtschaftlichen Kriterien optimierbar sind.

Weitere Merkmale, Einzelheiten und Vorteile der Erfindung ergeben sich aufgrund der nachfolgenden Beschreibung sowie anhand der Zeichnung. Diese zeigt in der einzigen Figur eine Wasserstoff-Erzeugungsanlage, in der das Einsatzgas 1 und Wasserdampf 2 rohrseitig in einen Primärreformer 3 gegeben werden.

In der nachfolgenden Beschreibung sind dabei teilweise Funktionen der Anlage unmittelbar mitbeschrieben:

Im Primärreformer 3 findet die endotherme Reaktion zu Wasserstoff, Kohlenmonoxid und Kohlendioxid statt und es bildet sich das rohe Synthesegas 4, das nach Kühlung in die CO-Konvertierung 5 geführt wird. Dort wird restliches Kohlenmonoxid mit Wasserdampf zu Kohlendioxid und Wasserstoff umgesetzt. Nach weiterer Abkühlung des Synthesegases wird Prozeßkondensat 6 abgeführt.

Das trockene Synthesegas 7 wird in eine Druckwechsel-Adsorptionsanlage 8 geführt, die das Synthesegas adsorptiv zu Produktgas 9 reinigt. Bei der Desorption wird der größte Teil des desorbierten Desorptionsgases 10, welches einen großen Heizwert besitzt, direkt in den Befeuerungsgas-Vorlagebehälter 11 abgelassen. Von dort aus wird das Befeuerungsgas 12 in den Mantelraum des Primärreformers 3 gegeben, wo es zusammen mit Luft 13 und Regelungsbrenngas 14 verbrannt wird und so die Energie für die rohrseitige endotherme Synthesegasreaktion bereitstellt. Das Abgas 15 wird aus dem Primärreformer 3 in die Atmosphäre abgeleitet.

Das Regelungsbrenngas 14 wird vom Brenngas 16 abgezweigt, aber höchstens soviel, wie für die Regelung eines stabilen Ofenbetriebes im Mantelbereich des Primärreformers 3 erforderlich ist. Der Rest des Brenngases 16, der nicht als Regelungsbrenngas 14 abgezweigt wird, dient als Brenngas-Treibstrahl 17 für den Betrieb des Ejektors 18. Der Ejektor 18 dient zur Verringerung des Druckniveaus auf der Ejektor-Aufgabeseite 19, das, je nach vorherrschendem Betriebszustand, entweder zur Erzeugung von Vakuum oder zur Erzeugung von Regelgas benutzt wird.

Im ersten Fall - dem Normalfall - wird Vakuumgas 22 aus dem Vakuumbehälter 21 gefördert, dessen Vakuum durch Öffnen der Vakuumleitung 20 nach dem Absperren der Leitung, die das Desorptionsgas 10 führt, einen zusätzlichen Desorptionsschritt in der Druckwechsel-Adsorptionsanlage 8 ermöglicht und somit die Wasserstoff-Ausbeute im Produktgas 9 vergrößert. Das Vakuumgas 22 wird im Ejektor 18 mit dem Brenngas-Treibstrahl 17 vermischt, verläßt den Ejektor 18 als Mischgas 23 und wird über die abzweigende Mischgasleitung 24 dem Befeuerungsgas-Vorlagebehälter 11 zugeführt. Dort wird es mit dem restlichen Desorptionsgas 10 gemischt.

Im zweiten Fall dient der Ejektor 18 zur Vergrößerung der Gasmenge, die für die Regelung des Primärreformers 3 zur Verfügung gestellt werden muß. Dieser Fall tritt insbesondere dann auf, wenn das in der Druckwechsel-Adsorptionsanlage 8 desorbierte Desorptionsgas 10 ausreicht, um den Energiebedarf des Primärreformers 3 bereits so weitgehend zu decken, daß die erforderliche Mindestmenge an Regelungsbrenngas 14 zur stabilen Regelung des Primärreformers 3 größer wäre als die noch fehlende Energiemenge zur Durchführung der endothermen rohrseitigen Reaktion.

Dies würde bedeuten, daß ein Teil des Desorptionsgases 10 verworfen werden müßte, damit noch Regelungsbrenngas 14 in ausreichender Menge zum Einsatz kommen kann. In diesem Fall läßt sich die Menge an Regelungsbrenngas 14 durch Desorptionsgas 10 in der Weise strecken, daß die Ejektor-Aufgabestelle 19 mit dem Vorlagebehälter 11 verbunden wird und Zusatzgas 25 zur Ejektor-Aufgabestelle 19 strömt. Dadurch wird der Druck im den Ejektor verlassenden Mischgas 23 so weit erhöht, daß über die Verbindungsleitung 26 zusätzliches Gas dem Regelungsbrenngas 14 zugemischt werden kann und für die Regelung zur Verfügung steht.

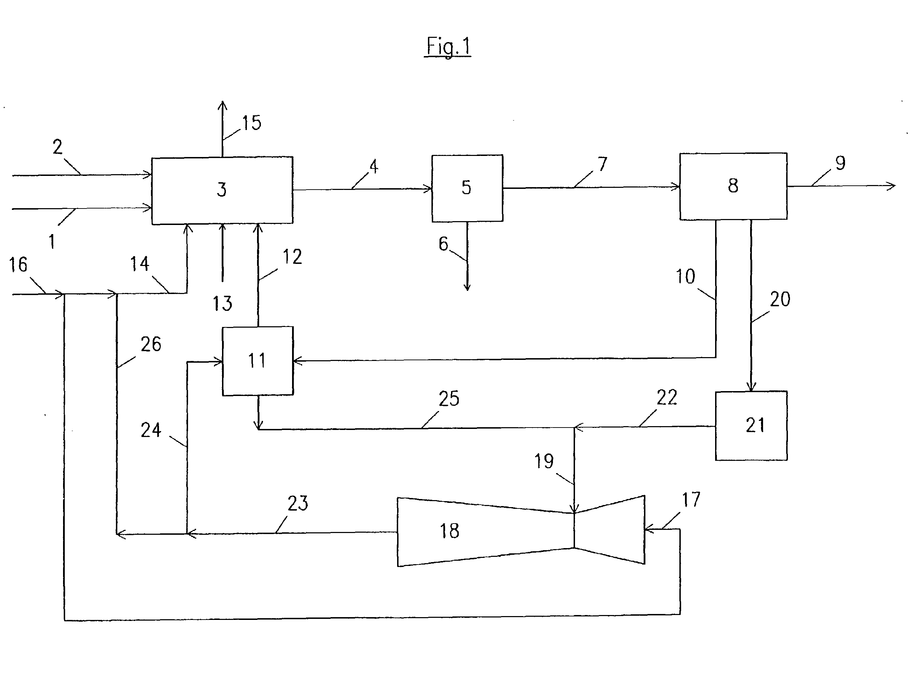

Bei der Erzeugung von Reduziergas tritt an die Stelle der in Fig. 1 dargestellten CO-Konvertierung 5 der Reduktionsprozeß, für den das Reduziergas produziert wird, mit einer nachgeschalteten Filtrierung und anstelle der als Produktgas 9 abzuführenden Leitung eine reingasseitige Rückführung vor den Reduktionsprozeß mit integrierter Rückverdichtung zum Ausgleich der gasseitigen Druckverluste.

## Patentansprüche

1. Verfahren zur Herstellung von Synthesegas, Wasserstoff und/oder Reduziergas unter Einsatz eines mantelseitig befeuerten Primärreformers, der im Verbund mit einer Druckwechsel-Adsorptionsanlage zur Reinigung des Produktgases betrieben wird,
**dadurch gekennzeichnet,**
**daß** der Druckwechsel-Adsorptionsanlage entnommenes Desorptionsabgas einem Ejektor saugseitig zugeführt wird, der von einem Teilstrom des Brenngases für den Primärreformer betrieben wird, wobei das Desorptionsabgas je nach Betriebsweise einem Brenngashauptstrom und/oder einem Brenngasregelstrom zugeführt wird.

2. Verfahren nach Anspruch 1,
**dadurch gekennzeichnet,**
**daß** mittels des Ejektors der Druck des Desorptions-Abgases von einem bei der Desorption herrschenden Niedrigdruck (Vakuum) auf das Druckniveau einer Vorlage für Befeuerungsgas des Primärreformers angehoben wird.

3. Verfahren nach Anspruch 1 oder 2,
**dadurch gekennzeichnet,**
**daß** mittels des Ejektors der Druck das Desorptions-Abgas von einem bei der Desorption herrschenden Niedrigdruck (Vakuum) auf das Druckniveau des für die Befeuerung des Primärreformers eingesetzten Regelungsgases angehoben wird.

4. Verfahren nach einem der vorangehenden Ansprüche,
**dadurch gekennzeichnet,**
**daß** die Vakuumerzeugung und die Anwendung der sich dabei einstellenden Vakuumdruckstufen auf die Desorption der Druckwechsel-Adsorptionanlage wenigstens zweistufig vorgenommen wird.

5. Anlage zur Herstellung von Synthesegas, Wasserstoff und/oder Reduziergas unter Einsatz eines mantelseitig befeuerten Primärreformers, der im Verbund mit einer Druckwechsel-Adsorptionsanlage zur Reinigung des Produktgases betrieben wird, insbesondere zur Durchführung des Verfahrens nach einem der vorangehenden Ansprüche,
**gekennzeichnet durch**
einen mit Brenngas betriebenen Ejektor (18) mit einem saugseitigen Anschluß (19) zur Beschickung mit Desorptionsgas.

6. Anlage nach Anspruch 5 mit einem Befeuerungsgas-Vorlagebehälter,
**gekennzeichnet durch**
einen Strömungsweg (22,23,24) für das Desorptions-Abgas über den Ejektor (18) zur Druckanhebung auf den im Vorlagebehälter (11) herrschenden Druck.

7. Anlage nach Anspruch 5,
**gekennzeichnet durch**
einen Strömungsweg (25,19,23,26) über den Ejektor (18) zur Druckanhebung einer Gasteilmenge aus dem Befeuerungsgas-Vorlagebehälter (11) auf das Druckniveau des Regelungsgases in dessen Strömungsweg (14).

## Claims

1. Process for the production of synthesis gas, hydrogen, and/or reducing gas by means of a primary reformer heated on the shell side and operated in conjunction with a pressure swing adsorption unit to purify the product gas,
**characterised in that** waste desorption gas taken from the pressure-swing adsorption unit is fed to the inlet side of an ejector which is driven by a part stream of primary reformer fuel gas, the waste desorption gas being admixed to a fuel gas main stream and/or a fuel gas regulating stream, depending on the particular mode of operation.

2. Process according to claim 1,
**characterised in that** the pressure of the waste desorption gas, which is at a low pressure due to the vacuum pressure level of the desorption process, is raised by means of the ejector to the pressure level of the fuel gas feed tank for the primary reformer.

3. Process according to claims 1 or 2,
**characterised in that** the pressure of the waste desorption gas, which is at a low pressure level due to the vacuum of the desorption process, is raised by means of the ejector to the pressure level of the regulating fuel gas used for firing the primary reformer.

4. Process according to any one of the preceding claims,
**characterised in that** the generation of vacuum and the application of the resulting vacuum pressure levels in the desorption step of the pressure swing adsorption unit is performed in at least two stages.

5. Apparatus for the production of synthesis gas, hydrogen, and/or reducing gas by means of a primary reformer heated on the shell side and operated in conjunction with a pressure swing adsorption unit to purify the product gas, in particular to carry out the process in accordance with any one of the preceding claims,
**characterised by** an ejector (18) driven by fuel gas, with a connection on the inlet side (19) for being fed with desorption gas.

6. Apparatus according to claim 5 with a fuel gas feed tank,
**characterised by** piping (22,23,24) for routing the waste desorption gas flow via the ejector (18), in order to increase the pressure prevailing in the feed tank (11).

7. Apparatus according to claim 5,
**characterised by** providing piping (25,19,23,26) via an ejector (18) in order to increase the pressure of a part stream of the gas from the fuel gas feed tank (11) to the pressure level of the regulating gas in its piping (14).

## Revendications

1. Procédé de production de gaz de synthèse, d'hydrogène et/ou de gaz réducteur avec utilisation d'un reformeur primaire enflammé du côté du manteau, qui est opéré conjointement avec un dispositif d'adsorption à pression alternée pour nettoyer les gaz produits, **caractérisé en ce que**
le gaz de désorption pris au dispositif d'adsorption à pression alternée est alimenté du côté de l'aspiration dans un éjecteur, qui est opéré par un courant partiel du gaz combustible pour le reformeur primaire, le gaz de désorption étant alimenté selon la manière de fonctionnement dans un courant principal de gaz combustible et/ou un courant de réglage de gaz combustible.

2. Procédé selon la revendication 1,
**caractérisé en ce que**
la pression du gaz d'échappement de désorption est élevée au moyen de l'éjecteur d'une pression faible (vide) régnant pendant la désorption jusqu'au niveau de pression d'un dispositif pour gaz d'inflammation du reformeur primaire.

3. Procédé selon la revendication 1 ou 2,
**caractérisé en ce que**
la pression du gaz d'échappement de désorption est élevée au moyen de l'éjecteur d'une pression faible (vide) régnant pendant la désorption jusqu'au niveau de pression du gaz de réglage utilisé pour enflammer le reformeur primaire.

4. Procédé selon l'une des revendications précédentes,
**caractérisé en ce que**
la production du vide et l'utilisation des étapes de pression du vide, se présentant dans ce cas, sur la désorption du dispositif d'adsorption à pression alternée sont entreprises au moins en deux étapes.

5. Dispositif de production de gaz de synthèse, d'hydrogène et/ou de gaz réducteur avec utilisation d'un reformeur primaire enflammé du côté du manteau, qui est opéré conjointement avec un dispositif d'adsorption à pression alternée pour nettoyer les gaz produits, en particulier pour effectuer le procédé selon l'une des revendications précédentes,
**caractérisé par**
un éjecteur opéré avec du gaz combustible (18) ayant un branchement du côté de l'aspiration (19) pour le chargement avec du gaz de désorption.

6. Installation selon la revendication 5 ayant un récipient collecteur pour gaz d'inflammation,
**caractérisé par**
un parcours de courant (22, 23, 24) pour le gaz d'échappement de désorption par l'éjecteur (18) pour l'élévation de la pression à la pression régnant dans le récipient collecteur (11).

7. Installation selon la revendication 5
**caractérisé par**
un parcours de courant (25, 19, 23, 26) par l'éjecteur (18) pour l'élévation de la pression d'une quantité partielle de gaz du récipient collecteur de gaz d'inflammation (11) au niveau de pression du gaz de réglage dans son parcours de courant (14).
